# EUROPÄISCHE PATENTANMELDUNG

(11) **EP 3 499 166 A1**
(43) Veröffentlichungstag der Anmeldung: **19.06.2019**
(21) Anmeldenummer: 17206593.0
(22) Anmeldetag: 12.12.2017
(51) Int. Cl.: F28D 20/00, F03G 6/00, F01K 3/00, F01K 3/18, F22B 1/00, F28D 1/06, F28D 7/10

(54) **ANLAGE UND VERFAHREN ZUM BEHEIZEN VON WÄRMESPEICHERN**

(71) Anmelder: Verbund Solutions GmbH, 1150 Wien (AT)
(72) Erfinder: Zauner, Rudolf, 2500 Baden (AT); Fink, Martin, 1160 Wien (AT)
(74) Vertreter: Patentanwaltskanzlei Matschnig & Forsthuber OG

(57) **Zusammenfassung**

Die Erfindung betrifft eine Anlage (1) zur autarken Beheizung einer Wärmespeichereinheit (10) mit zumindest einem Wärmespeicher (11, 12). Die Anlage (1) umfasst eine Wasserstofferzeugungseinheit (20), einen Gasspeichertank (30) und eine Gasfeuerungsvorrichtung (40), die mit einer Gaszuleitung (35) miteinander verbunden sind, sowie weiterhin eine Stromzuleitung (25), die zur Bereitstellung von elektrischem Strom (29) mit der Wasserstofferzeugungseinheit (20) verbunden ist, wobei die Gasfeuerungsvorrichtung (40) mit der Wärmespeichereinheit (10) mit einer Beheizungsvorrichtung (45) thermisch gekoppelt ist, sowie in dem Gasspeichertank (30) ein in der Wasserstofferzeugungseinheit (20) hergestelltes Brenngas (39) enthaltend Wasserstoff zwischengelagert ist, wobei die Gasfeuerungsvorrichtung (40) derart ausgestaltet ist, das aus dem Gasspeichertank (30) zugeführte Brenngas (39) zu verfeuern und dabei in thermische Energie (49) umzuwandeln, wobei die thermische Energie (49) von der Beheizungsvorrichtung (45) der Wärmespeichereinheit (10) zugeführt ist.

## Beschreibung

Die Erfindung betrifft eine Anlage sowie ein Verfahren zur autarken Beheizung einer Wärmespeichereinheit mit zumindest einem Wärmespeicher, insbesondere einem Salzschmelzespeicher. Weiters werden im Rahmen der Erfindung eine Anlage sowie ein Verfahren zum Speichern von Energie angegeben.

Wärmespeicher sind generell Speicher für thermische Energie, wobei üblicherweise in Speicher für sensible Wärme, also Wärmepuffer, die beim Lade- oder Entladevorgang des Wärmespeichers ihre fühlbare Temperatur verändern, sowie in Latentwärmespeicher unterschieden wird.

Prinzipiell funktionieren Latentwärmespeicher durch die Ausnutzung der Enthalpie thermodynamischer Zustandsänderungen eines Speichermediums. Das dabei am häufigsten genutzte Prinzip ist die Ausnutzung des Phasenübergangs fest-flüssig und umgekehrt (Erstarren-Schmelzen). Beim Aufladen des Inhalts kommerzieller Latentwärmespeicher werden meist spezielle Salze oder Paraffine als Speichermedium geschmolzen, die dabei sehr viel Wärmeenergie (Schmelzwärme) aufnehmen. Das Entladen findet als Erstarren statt, wobei das Speichermedium die zuvor aufgenommene große Wärmemenge als Erstarrungswärme wieder an die Umgebung abgibt. Das Speichermedium kann allerdings über seine Latentwärmekapazität hinaus be- oder entladen werden, was dann zu einer Temperaturänderung des Speichermediums führt.

Bei technischen Anwendungen von Latentwärmespeichern ist allerdings eine Unterkühlung der Schmelze in der Regel unerwünscht.

Dies trifft insbesondere für Salzschmelzespeicher zu, die nur in einem definierten Arbeitsbereich oberhalb ihrer jeweiligen Schmelztemperatur funktionstüchtig sind und eine dünnflüssige Salzschmelze aufweisen, weshalb der Einsatz von entsprechenden Begleitheizungen für solche Salzschmelzespeicher erforderlich ist, um im laufenden Betrieb des Wärmespeichers die Salzschmelze flüssig zu halten. Da üblicherweise bei Salzschmelzespeicher der Lade- bzw. Entladevorgang mit einer fühlbaren Temperaturänderung der Salzschmelze verbunden ist, sind diese den sensiblen Wärmespeichern zuzuordnen.

Aus dem Stand der Technik sind bereits zahlreiche unterschiedliche Ausführungen von Anlagen zum Speichern von Energie insbesondere aus regenerativen Energieformen bekannt. Beispielhaft seien dazu Photovoltaik-Anlagen, Windkraftwerke oder Wasserkraftwerke genannt.

So ist aus dem Dokument DE 10 2012 005 023 A1 eine Stromerzeugungs-Einheit bekannt, die elektrischen Strom aus regenerativen Energieformen erzeugt. Nachteilig daran ist zumindest, dass die Verfügbarkeit solcher regenerativer Energien wesentlich von den jeweiligen Wettereinflüssen abhängt, unstetig und daher weder beeinflussbar noch vorhersagbar ist.

Die Druckschrift DE 10 2013 223 589 B4 schlägt dazu vor, die Verfügbarkeit von elektrischem Strom, der aus regenerativen Energieformen erzeugt worden ist, zu verbessern, indem bei einer Anlage zum Speichern von Energie die Stromerzeugungs-Einheit mit einer Wärmeerzeugungs-Einheit zur Bereitstellung von elektrischem Strom für die Wärmeerzeugung beispielsweise mit einem Stromkabel verbunden ist. Die Wärmeerzeugungs-Einheit ist mit einer Leitung, die beispielsweise als sogenanntes Wärmerohr (englisch als heat pipe bezeichnet) ausgeführt ist, mit einer Wärmespeicherungs-Einheit verbunden. Die Wärmespeicherungs-Einheit kann beispielsweise als Salzspeicher ausgeführt sein, der auf eine Temperatur von etwa 500°C erhitzt werden kann. Die genannte Anlage weist außerdem einen Wasserstoffspeicher zum Speichern von Wasserstoff auf, der beispielsweise in einem Elektrolyseur der Anlage selbst erzeugt worden ist. Weiters umfasst diese Anlage sowohl eine Belade-Einheit, als auch eine Entlade-Einheit, wobei der erzeugte Wasserstoff in der Belade-Einheit auf ein Trägermedium beladen bzw. anschließend in der Entlade-Einheit von diesem Trägermedium wieder entladen wird. Als Trägermedium dienen polyzyklische, aromatische Verbindungen, sogenannte Liquid Organic Hydrogen Carrier (LOHC), welche an sich bereits aus dem Dokument EP 1475 349 A2 bekannt sind. Beispielsweise werden Dibenzyltoluole und Benzyltoluole als LOHC-Trägermedium verwendet. Die Beladung des LOHC-Trägermediums mit Wasserstoff, also die Hydrierung, erfolgt bei einem Verfahrensdruck von 2 bar bis 200 bar bei Temperaturen zwischen 50°C und 400°C in Gegenwart eines metallhaltigen Katalysators. Die Entladung des beladenden Trägermediums erfolgt in einem Druckreaktor bei Temperaturen zwischen 100°C und 450°C bei Prozessdrücken zwischen 0,1 bar und 30 bar ebenfalls unter Einsatz eines weiteren metallhaltigen Katalysators, der dazu geeignet ist, den abgegebenen Wasserstoff wieder als Wasserstoffgas freizusetzen.

Nachteilig ist an der aus DE 10 2013 223 589 B4 bekannt gewordenen Anlage bzw. dem zugehörigen Verfahren zum Speichern von Energie zumindest, dass das Bereitstellen sowie Beladen und Entladen des LOHC-Trägermediums als Wasserstoff-Träger aufwendig ist, da zum Beladen und Entladen von Wasserstoff jeweils thermische Energie erforderlich ist. Außerdem ist der Einsatz solcher polyzyklischen, aromatischen Verbindungen problematisch, da es sich dabei um gesundheitsgefährliche und umweltschädliche Substanzen handelt. Überdies ist bei dieser Anlage von Nachteil, dass eine autarke Begleitheizung für die als Salzspeicher ausgeführte Wärmespeicherungs-Einheit sowie für die mit Salzschmelze befüllten Anlagenteile nicht vorgesehen ist. Somit ist eine ständige externe Energieversorgung erforderlich, um eine kontinuierliche Begleitheizung des Salzspeichers zu gewährleisten.

Salzschmelzespeicher haben als Wärmespeicher insbesondere in Kombination mit der erneuerbaren Energietechnologie CSP (Concentrated Solar Power) zwischenzeitlich bereits großtechnische Bedeutung erlangt. Beispielhaft seien an dieser Stelle die CSP-Anlagen Andasol in Südspanien genannt. Solarthermische Kraftwerke erzeugen aus der Wärmenergie der direkten und diffusen Sonnenstrahlung Strom. Bei einem Parabolrinnen-Kraftwerk bündeln rinnenförmige Spiegel die Sonnenstrahlen auf ein in der Brennlinie eines Kollektors angeordnetes Rohr. Im Inneren des Rohres wird dadurch eine Wärmeträgerflüssigkeit erhitzt, die in einem Kraftwerksblock mittels entsprechender Wärmetauscher Dampf erzeugen kann. Dieser Dampf kann anschließend wie auch in konventionellen Kraftwerken in einer Turbine zur Stromgewinnung genutzt werden. Mit Hilfe von Flüssigsalztanks, die als thermische Salzschmelzespeicher zum Zwischenspeichern von Energie dienen, kann der Strom bedarfsgerecht bereitgestellt werden.

Zur Wärmespeicherung werden vorzugsweise Mischungen aus Salzen, beispielsweise eutektische Mischungen der Salze Kaliumnitrat und Natriumnitrat, verwendet. Die flüssige Salzschmelze wird dabei zwischen Salzspeichertanks auf jeweils unterschiedlichen Temperaturniveaus, also zwischen einem kalten Salzspeichertank und einem heißen Salzspeichertank, alternierend hin und her gepumpt. In Zeitabschnitten, in denen die zwischengespeicherte Energie beispielsweise für die Verstromung benötigt wird, verläuft der Salzschmelzefluss vom heißen Salzspeichertank zum kalten Salzspeichertank. Während der Zufuhr und Einspeisung von solarthermischer Energie in den Salzschmelzespeicher erfolgt der Salzschmelzefluss in umgekehrter Fließrichtung vom kalten zum heißen Salzspeichertank. Der Salzvorrat muss dabei allerdings ständig in geschmolzenem Zustand bleiben. Je nach eingesetzter eutektischer Salzmischung liegen die Schmelztemperaturen derartiger Salzmischungen etwa im Bereich von 250°C bis 350°C. Sinkt die Temperatur der Salzmischung unter die Schmelztemperatur des Eutektikums, so wird die Salzschmelze unerwünschterweise zähflüssig oder kann sogar erstarren und fest werden- man spricht dann von einem Einfrieren der Salzschmelze - wobei die CSP-Anlage dadurch beschädigt werden kann. Um zu gewährleisten, dass die Salzschmelze dünnflüssig und damit förderbar bzw. pumpbar bleibt sowie um ein unerwünschtes Zähflüssig-Werden bzw. Erstarren der Salzmischung zu verhindern, müssen sämtliche Salzschmelze führenden Anlagenteile samt den Salzspeichertanks ständig begleitbeheizt werden. Die Begleitbeheizung erfolgt im Normalfall über externe fossile Energieträger wie beispielsweise Erdgas, die der CSP-Anlage von außen zugeführt werden müssen. Der Energieverbrauch externer fossiler Energieträger, die rein zur Begleitheizung der Salzschmelze erforderlich sind, macht bei derzeitigen in Betrieb befindlichen großtechnischen CSP-Anlagen allerdings einen signifikanten Anteil von deren Gesamtenergieproduktion aus. Als Richtwert für den Einsatz an benötigtem Erdgas kann beispielsweise ein Energieverbrauch von 15% bezogen auf die Gesamtenergieproduktion abgeschätzt werden. Oder in anderen Worten: Etwa 15% der gesamten produzierten Energie einer großtechnischen CSP-Anlage sind derzeit erforderlich, um mittels fossilem Erdgas die Salzschmelzetanks und -leitungen zu beheizen. Dies ist nicht nur aufwendig, sondern erhöht bzw. verschlechtert auch die CO₂-Bilanz derartiger Salzschmelzespeicher erheblich. Überdies sind solche Salzschmelzespeicher von einer externen Energieversorgung, üblicherweise von einer Erdgas-Versorgung, abhängig. Eine autarke Beheizung der Wärmespeicher ist im derzeitigen Stand der Technik weder vorgesehen, noch möglich.

Wärmespeicher, insbesondere Salzschmelzespeicher, sind also ein zentrales Element zum effektiven Energiemanagement im Bereich der Strombereitstellung aus unstetig verfügbaren regenerativen Energieformen. Sie sind für eine verstärkte Nutzung der Sonnen- und Windenergie unverzichtbar. Die kommerziell verfügbaren Wärmespeichertechnologien erfüllen allerdings nur eingeschränkt die für einen breiten Einsatz erforderlichen Kriterien der Energieeffizienz, Lebensdauer und Wirtschaftlichkeit.

Die vorliegende Erfindung setzt sich daher zum Ziel, für die eingangs genannten Anlagen sowie Verfahren zum Beheizen von Wärmespeichern die aus dem Stand der Technik bekannten Nachteile zu vermeiden. Weiters sollen an sich bekannte Anlagen sowie Verfahren zum Speichern von Energie insbesondere aus regenerativen Energieformen hinsichtlich deren CO₂-Bilanz sowie deren Systemintegration dahingehend verbessert werden, als dass die erforderliche Beheizung von Wärmespeichern, insbesondere von Salzschmelzespeichern, sowie von peripheren Anlagenteilen, die ebenfalls begleitbeheizt werden müssen, möglichst autark sowie möglichst frei von externen fossilen Energieträgern erfolgen soll.

Diese Aufgaben werden im Rahmen der Erfindung von einer Anlage zur autarken Beheizung einer Wärmespeichereinheit mit den Merkmalen des kennzeichnenden Teiles von Anspruch 1 gelöst. Weiters wird im Rahmen der Erfindung ein Verfahren zur autarken Beheizung einer Wärmespeichereinheit mit den Merkmalen von Anspruch 12 angegeben. Vorteilhafte Ausgestaltungen und Fortbildungen der Erfindung sind in den Unteransprüchen und der Beschreibung dargelegt.

Bei einer erfindungsgemäßen Anlage zur autarken Beheizung einer Wärmespeichereinheit mit zumindest einem Wärmespeicher, insbesondere einem Salzschmelzespeicher, umfasst die Anlage eine Wasserstofferzeugungseinheit, einen Gasspeichertank und eine Gasfeuerungsvorrichtung, die mit einer Gaszuleitung miteinander verbunden sind, sowie weiterhin eine Stromzuleitung, die zur Bereitstellung von elektrischem Strom mit der Wasserstofferzeugungseinheit verbunden ist, wobei die Gasfeuerungsvorrichtung mit der Wärmespeichereinheit mittels einer Beheizungsvorrichtung thermisch gekoppelt ist, sowie in dem Gasspeichertank ein in der Wasserstofferzeugungseinheit hergestelltes Brenngas enthaltend Wasserstoff zwischengelagert ist, wobei die Gasfeuerungsvorrichtung derart ausgestaltet ist, das aus dem Gasspeichertank zugeführte Brenngas zu verfeuern und dabei in thermische Energie umzuwandeln, wobei die umgewandelte thermische Energie von der Beheizungsvorrichtung der Wärmespeichereinheit zugeführt ist.

Es wird in diesem Zusammenhang angemerkt, dass der hier verwendete Begriff "ein" bzw. "eine" als unbestimmter Artikel zu verstehen ist, so dass erfindungsgemäß bei einer Beheizungsanlage beispielsweise jeweils eine, zwei oder mehrere Wasserstofferzeugungseinheiten, Gasspeichertanks und/oder Gasfeuerungsvorrichtungen, die mit einer, zwei oder mehreren Gaszuleitungen miteinander verbunden sind, vorgesehen sein können. Ebenso kann die erfindungsgemäße Beheizungsanlage zur Beheizung mehrerer Wärmespeichereinheiten bzw. mehrerer Wärmespeicher, die beispielsweise seriell oder parallel miteinander verbunden sind, dienen.

Im Rahmen der vorliegenden Erfindung werden vom gewählten Begriff einer "Wärmespeichereinheit" neben dem zumindest einen Wärmespeicher weiters auch die zum Wärmespeicher zugehörigen, peripheren Anlagenteile umfasst wie beispielsweise Rohrleitungen, Ventile oder vergleichbare Armaturen sowie Pumpen, die erforderlich sind, um ein Wärmespeichermedium in einem Wärmespeicherkreislauf mit einem oder mit mehreren Wärmespeichern sowie mit entsprechenden Wärmetauschern fördern zu können. Auch diese peripheren Anlagenteile müssen beheizt werden können, da sie ebenfalls mit Wärmespeichermedium beaufschlagt sind. Dies ist insbesondere dann besonders relevant, wenn als Wärmespeicher beispielhaft ein Salzschmelzespeicher eingesetzt wird und die damit verbundenen peripheren Anlagenteile wie beispielsweise Rohrleitungen mit Salzschmelze beaufschlagt sind, die nicht zähflüssig werden bzw. nicht erstarren darf.

Der oder die Wärmespeicher dienen bevorzugt zum Speichern von Energie insbesondere aus regenerativen Energieformen, die meist nur unstetig zur Verfügung stehen.

Weiters wird im Folgenden der gewählte Begriff einer "autarken" Beheizung näher definiert. Die erfindungsgemäße Beheizungsanlage bietet den Vorteil, durch die Anordnung einer Wasserstofferzeugungseinheit, eines Gasspeichertanks sowie einer Gasfeuerungsvorrichtung, die miteinander mittels einer Gaszuleitung verbunden sind, ein in der Wasserstofferzeugungseinheit selbst hergestelltes Brenngas, welches Wasserstoff enthält, in dem Gasspeichertank zwischenlagern zu können. Dieses Brenngas kann dann bei Bedarf - unabhängig und autark vom jeweils verfügbaren Angebot an beispielsweise von einem Solarkraftwerk unstetig bereitgestellter thermischer Energie - verfeuert und zur Begleitheizung der Wärmespeichereinheit zugeführt werden. Zweckmäßig ist die Beheizungsanlage mit einer Stromerzeugungseinheit gekoppelt, wobei besonders vorteilhaft der bereitgestellte elektrische Strom aus erneuerbaren, regenerativen Energiequellen erzeugt ist. In Zeiten, in denen kein Überschuss an thermischer Energie zur Verstromung zur Verfügung steht, also die Wasserstofferzeugungseinheit mit externem Strom betrieben werden müsste, ist es somit möglich, die erfindungsgemäße Beheizungsanlage autark rein mit dem im Gasspeichertank zwischengelagerten Brenngas zu befeuern. Es besteht damit keine Abhängigkeit mehr von extern zugeführten Energieträgern für die Beheizung der Wärmespeichereinheit.

Zweckmäßig kann bei einer erfindungsgemäßen Beheizungsanlage die Wasserstofferzeugungseinheit zumindest einen Elektrolyseur umfassen, wobei das hergestellte Brenngas zumindest 95 Vol.-% Wasserstoff, vorzugsweise von 97 Vol.-% bis 99,999 Vol.-% Wasserstoff, enthält. Als Elektrolyseur kann beispielsweise ein Polymer-Elektrolyt-Membran (PEM)-Elektrolyseur eingesetzt werden, mit dem hochreiner Wasserstoff mit einer Reinheit von bis zu 99,999 Vol.-% Wasserstoff herstellbar ist. Bei einem PEM-Elektrolyseur wird eine polymere Ionentauschermembran als Feststoffelektrolyt verwendet. Vorteilhaft erfolgt die Wasserstoffelektrolyse in einem PEM-Elektrolyseur üblicherweise bei moderaten Temperaturen beispielsweise von 60° bis 80°C.

In einer vorteilhaften Weiterbildung der Erfindung kann bei einer Beheizungsanlage die Wasserstofferzeugungseinheit mit einer Methanisierungseinheit zur Herstellung von Methan-haltigem Brenngas gekoppelt sein. Gleichbedeutend kann Wasserstoff auch methanisiert werden und das so hergestellte Methangas ebenfalls als Brenngas zur Beheizung der Wärmespeichereinheit dienen.

Die Herstellung von Methan durch eine heterogene Katalyse von Kohlenstoffmonoxid (CO) und Wasserstoff wird als Methanisierung bezeichnet. Bei dieser Reaktion reagiert Kohlenstoffmonoxid bei Temperaturen von etwa 300° bis 700°C mit elektrolytisch hergestelltem Wasserstoff zu Methan und Wasser. Diese Reaktion ist exotherm, muss jedoch durch einen Katalysator beschleunigt werden. Hierzu dienen meist Nickel-basierte Katalysatoren.

Bedeutend ist die Methanisierung beim Entfernen von Kohlenstoffmonoxid-Spuren, die in manchen Prozessen als Katalysatorgift wirken. Aus Gasen mit hohem CO-Anteil kann durch Methanisierung sogenanntes Synthetic Natural Gas (kurz SNG) gewonnen werden.

Der Einspeisung von Brenngas mit einem höheren Anteil an Wasserstoff sind von Seiten der Gasnetzbetreiber enge Grenzen gesetzt. Die Koppelung der Wasserstofferzeugungseinheit mit einer zusätzlichen Methanisierungseinheit, um das Wasserstoff-haltige Brenngas in Methan-haltiges Brenngas, also in SNG umzuwandeln, bietet den Vorteil, dass somit auch größere Mengen an Brenngas in bestehende Gasnetze eingespeist werden können.

In einer weiteren vorteilhaften Ausführung der Erfindung kann bei einer Beheizungsanlage die Wärmespeichereinheit zumindest zwei auf unterschiedlichen Temperaturniveaus betriebene Wärmespeicher sowie damit verbundene Rohrleitungen und/oder periphere Anlagenteile umfassen.

Beispielhaft kann eine Wärmespeichereinheit zum Zwischenspeichern von solarthermischer Energie zwei Salzschmelzespeicher umfassen, wobei ein erster Salzschmelzespeicher auf einem niedrigeren Temperaturniveau gehalten wird als der zweite Salzschmelzespeicher. Der erste Salzschmelzespeicher wird im Folgenden daher als (relativ) kalter Salzschmelzespeicher bezeichnet, während der zweite Wärmespeicher als (relativ) heißer Salzschmelzespeicher bezeichnet wird. Die Salzschmelze als Wärmespeichermedium wird dabei mittels Verbindungsleitungen zwischen den beiden Salzschmelzespeichern hin und her gepumpt. Die Salzschmelze muss ständig im geschmolzenen Zustand bleiben - je nach verwendeter Salzmischung beispielsweise in einem Temperaturbereich von 250°C bis 350°C.

In Zeiten, in denen gespeicherte thermische Energie beispielsweise für die Verstromung benötigt wird, verläuft der Salzschmelzefluss vom heißen Salzschmelzespeicher zum kalten Salzschmelzespeicher. Im umgekehrten Fall bei der Bereitstellung von überschüssiger thermischer Energie durch das Solarkraftwerk, wobei die bereitgestellte thermische Energie in der Wärmespeichereinheit zwischengespeichert werden soll, verläuft der Salzschmelzefluss vom kalten zum heißen Salzschmelzespeicher. Die zwischengespeicherte Energie kann beispielsweise über einen Wärmetauscher direkt zur Beheizung eines Dampfkreislaufes oder indirekt zur Beheizung des Dampfkreislaufs mittels eines zwischengeschalteten Wärmekreislaufes verwendet werden. Im Dampfkreislauf ist beispielsweise eine Dampfturbine zur Verstromung der thermischen Energie vorgesehen.

Besonders zweckmäßig ist es, wenn im Rahmen der Erfindung bei einer Beheizungsanlage der zumindest eine Wärmespeicher aus der Gruppe umfassend: sensibler Wärmespeicher, Latentwärmespeicher und/oder Salzschmelzespeicher ausgewählt ist. Wie eingangs bereits erwähnt verändern sensible Wärmespeicher, beispielsweise Wärmepuffer, beim Lade- oder Entladevorgang ihre fühlbare Temperatur. Latentwärmespeicher verändern beim Lade- oder Entladevorgang nicht ihre fühlbare Temperatur, sondern das entsprechende Wärmespeichermedium ändert bei äußeren Temperaturschwankungen seinen Aggregatzustand. Das Wärmespeichermedium kann allerdings über seine Latentwärmekapazität hinaus be- oder entladen werden, was erst dann zu einer Temperaturerhöhung bzw. Temperaturänderung des Wärmespeichermediums führt. Im Rahmen der Erfindung können auch Salzschmelzespeicher eingesetzt werden. Je nach verwendeter Salzmischung bzw. je nach Zusammensetzung der Salzschmelze können solche Salzschmelzespeicher beispielsweise als sensible Wärmespeicher oder aber als Latentwärmespeicher eingesetzt werden.

Um eine möglichst positive CO₂-Bilanz bei einer erfindungsgemäßen Beheizungsanlage zu erzielen, ist es vorteilhaft, wenn der bereitgestellte elektrische Strom aus erneuerbaren, regenerativen Energiequellen erzeugt ist.

Zweckmäßig ist bei einer erfindungsgemäßen Beheizungsanlage in dem Gasspeichertank Brenngas in einem Druckbereich von 1 bar bis 900 bar zwischengelagert. Das Brenngas ist dabei vorzugsweise in gasförmiger Form gelagert. Optional kann das Brenngas zuvor vor der Zwischenspeicherung auch noch getrocknet werden. Als weitere Option kann das zuvor in einem Elektrolyseur hergestellte Wasserstoff-haltige Brenngas auch in einer Methanisierungseinheit in Methan-haltiges Brenngas umgewandelt werden, um dann als Methan-haltiges Brenngas zwischengelagert zu werden. Vorteilhaft führt die Komprimierung des Brenngases zur Verringerung des Speichervolumens.

In einer weiteren vorteilhaften Ausführung einer Beheizungsanlage gemäß der Erfindung liegt die Abgastemperatur des in der Gasfeuerungsvorrichtung verfeuerten Brenngases um mindestens 10 K (Kelvin) über der Temperatur des zumindest einen Wärmespeichers der Wärmespeichereinheit, vorzugsweise bei mehreren Wärmespeichern um mindestens 10 K (Kelvin) über der Temperatur des kältesten zu beheizenden Wärmespeichers. Vorteilhaft wird zur Beheizung der Wärmespeichereinheit die Abgastemperatur des Brenngases um mindestens 10 K höher eingestellt als die Temperatur des Wärmespeichermediums - bei mehreren Wärmespeichern jene Temperatur des Wärmespeichermediums im kältesten zu beheizenden Wärmespeicher. Mit dieser gewählten Temperaturspreitzung wird eine rasche und gleichzeitig schonende Beheizung der Wärmespeichereinheit gewährleistet. Zweckmäßig erfolgt die Wärmezufuhr von der Gasfeuerungsvorrichtung zu dem zumindest einen Wärmespeicher mit einer Beheizungsvorrichtung, die beispielsweise als Doppelmantelwärmetauscher am Wärmespeicher ausgeführt ist.

In einer Weiterbildung der Erfindung wird eine Anlage zum Speichern von Energie angegeben, welche eine erfindungsgemäße Beheizungsanlage umfasst, wobei die Anlage zum Speichern von Energie weiterhin eine Energiebereitstellungseinheit zur Bereitstellung von thermischer Energie, vorzugsweise von erneuerbarer thermischer Energie, einen Dampfkreislauf zur Einspeisung der bereitgestellten thermischen Energie, sowie eine Stromerzeugungseinheit zur Bereitstellung von elektrischem Strom umfasst, wobei die Stromerzeugungseinheit mit dem Dampfkreislauf zur Umwandlung der bereitgestellten thermischen Energie in elektrischen Strom gekoppelt ist, sowie die Wärmespeichereinheit mit dem Dampfkreislauf zur Einspeisung von gespeicherter thermischer Energie gekoppelt ist.

Eine solche Energiespeicheranlage bietet den Vorteil, dass die zuvor beschriebene autarke Beheizungsanlage zur Beheizung der Wärmespeichereinheit vollständig in die Energiespeicheranlage integriert ist. Eine Energiebereitstellungseinheit, beispielsweise ein Solarthermischer Kreislauf eines Solarkraftwerks, dient dabei zur Bereitstellung von thermischer Energie, vorzugsweise von erneuerbarer thermischer Energie. Diese bereitgestellte thermische Energie wird in einen Dampfkreislauf eingespeist. Weiters umfasst die Energiespeicheranlage eine Stromerzeugungseinheit zur Bereitstellung von elektrischem Strom, wobei die Stromerzeugungseinheit mit dem Dampfkreislauf zur Umwandlung der bereitgestellten thermischen Energie in elektrischen Strom gekoppelt ist. Thermische Energie, die im Falle eines Solarkraftwerks zu Spitzenzeiten - also tagsüber bei sonnigem Wetter - üblicherweise im Überschuss zur Verfügung steht, kann zumindest teilweise verstromt werden. Ein Überschuss an thermischer Energie wird der Wärmespeichereinheit zur Verfügung gestellt bzw. in dieser zwischengespeichert. Zumindest ein Teil des erzeugten elektrischen Stroms - der im Falle der Koppelung mit einem Solarkraftwerk sogenannter "grüner Strom" bzw. "Ökostrom" - kann der Wasserstofferzeugungseinheit zugeführt werden, um Brenngas zu produzieren und dieses im Gasspeichertank einzulagern.

Da die Wärmespeichereinheit mit dem Dampfkreislauf zur Einspeisung von gespeicherter thermischer Energie thermisch gekoppelt ist, kann somit die Verstromung von thermischer Energie in der Energiespeicheranlage vorteilhaft auch dann gewährleistet werden, wenn keine Zufuhr von Solarthermischer Energie durch das Solarkraftwerk erfolgt, wie dies beispielsweise bei bedecktem Himmel bzw. während der Nachtstunden der Fall ist. In dieser Zeit, in der keine oder zu wenig thermische Energie von der Energiebereitstellungseinheit zur Verfügung gestellt wird, wird die in der Wärmespeichereinheit zwischengespeicherte thermische Energie in den Dampfkreislauf eingespeist. Dadurch ist vorteilhaft eine kontinuierliche Stromerzeugung möglich. Da zumindest ein Teil des kontinuierlich erzeugten elektrischen Stroms der Elektrolyse zugeführt wird, ist somit auch ein kontinuierlicher Betrieb der Beheizungsanlage gewährleistet. Überschüsse an erzeugtem elektrischem Strom bzw. an hergestelltem Brenngas können beispielsweise in externe Strom- bzw. Gasnetze eingespeist werden. Aufgrund der flexiblen Steuerungsmöglichkeiten im Betrieb der erfindungsgemäßen Energiespeicheranlage kann die Einspeisung der erzeugten Überschüsse von produziertem Strom bzw. von Brenngas in die jeweiligen externen Netze zu jenen Zeitabschnitten bzw. Tageszeiten erfolgen, in denen höhere Energiepreise für Strom bzw. Brenngas erzielt werden können, was ein weiterer wirtschaftlicher Vorteil der bereitgestellten Energiespeicheranlage ist.

Besonders vorteilhaft ist bei einer Energiespeicheranlage gemäß der Erfindung, wenn die Wärmespeichereinheit mit der Energiebereitstellungseinheit zum Speichern von überschüssiger thermischer Energie gekoppelt ist.

In dieser Ausführung kann überschüssige thermische Energie direkt von der Energiebereitstellungseinheit, beispielsweise von einem Solarthermischen Kraftwerk, in der Wärmespeichereinheit der Energiespeicheranlage gespeichert werden.

Zweckmäßig kann bei einer erfindungsgemäßen Energiespeicheranlage die Energiebereitstellungseinheit, welche thermische Energie bereitstellt, ausgewählt sein aus einer Gruppe umfassend: Solarthermisches Kraftwerk, Biomasse-Heizkraftwerk, Dampfkraftwerk, Nahwärmeheizkraftwerk, Fernwärmeheizkraftwerk, Power-to-heat-Anlage, Kraft-Wärme-Kopplung (KWK)-Anlage.

Die thermische Energie, die von einem Solarthermischen Kraftwerk oder einem Biomasse-Heizkraftwerk bereitgestellt wird, hat überdies den Vorteil, aus erneuerbaren, regenerativen Energiequellen zu stammen. Auch von einem Dampfkraftwerk, Nahwärmeheizkraftwerk oder Fernwärmeheizkraftwerk kann thermische Energie für eine erfindungsgemäße Energiespeicheranlage bereitgestellt werden.

Steht bei starker Einspeisung variabler regenerativer Energien - insbesondere von Windenergie und Photovoltaik - einer hohen Stromproduktion nur eine geringe Stromnachfrage gegenüber, so kann mittels sogenannter Power-to-Heat-Anlagen auch aus elektrischem Strom Wärme gewonnen werden. Diese thermische Energie wurde zuvor aus erneuerbarem Strom beispielsweise mittels Wasserkraft, Windkraft und/oder Photovoltaik erzeugt und anschließend in einer Power-to-heat-Anlage in thermische Energie umgewandelt, welche dann ebenso für eine erfindungsgemäße Energiespeicheranlage bereitgestellt werden kann.

Unter dem Begriff einer Kraft-Wärme-Kopplung (KWK) bzw. einer Wärme-Kraft-Kopplung (WKK) ist die gleichzeitige Gewinnung von mechanischer Energie und nutzbarer Wärme in einem gemeinsamen thermodynamischen Prozess, üblicherweise in einem Heizkraftwerk, zu verstehen. Die gewonnene mechanische Energie wird dabei in der Regel unmittelbar in elektrischen Strom umgewandelt. Die nutzbare Wärme dient meist für Heizzwecke (beispielsweise als Fernwärme oder Nahwärme) oder für Produktionsprozesse (als Prozesswärme zum Beheizen des Produktionsprozesses).

In einer vorteilhaften Weiterbildung der erfindungsgemäßen Energiespeicheranlage kann diese weiterhin eine Netzeinspeisung für erzeugten elektrischen Strom in ein externes Stromnetz und/oder eine Gaseinspeisung für erzeugtes Brenngas in ein externes Gasnetz umfassen. Wie zuvor bereits erwähnt wurde kann für die Einspeisung des erzeugten Brenngases in ein externes Gasnetz gegebenenfalls noch eine Methanisierung des Brenngases, also die Umwandlung von Wasserstoff-haltigem Brenngas zu Synthetic Natural Gas, erforderlich sein.

Abhängig von der jeweiligen Ausrichtung einer solchen Energiespeicheranlage kann diese somit vorteilhaft auch als Energieumwandlungsanlage bzw. als Stromerzeugungsanlage und/oder als Brenngaserzeugungsanlage dienen.

Weiters wird im Rahmen der Erfindung ein Verfahren zur autarken Beheizung einer Wärmespeichereinheit mit zumindest einem Wärmespeicher, insbesondere einem Salzschmelzespeicher, angegeben, wobei in einer Wasserstofferzeugungseinheit ein Brenngas enthaltend Wasserstoff hergestellt wird, welches Brenngas anschließend in einem Gasspeichertank zwischengelagert sowie bedarfsweise einer Gasfeuerungsvorrichtung zugeführt und dabei in thermische Energie umgewandelt wird, wobei die Gasfeuerungsvorrichtung mit der Wärmespeichereinheit mit einer Beheizungsvorrichtung thermisch gekoppelt ist und die umgewandelte thermische Energie von der Beheizungsvorrichtung der Wärmespeichereinheit zugeführt wird.

Vorteilhaft wird mit dem erfindungsgemäßen Verfahren gewährleistet, dass ein Wärmespeicher autark und unabhängig von der kontinuierlichen Verfügbarkeit von elektrischem Strom aus einem externen Stromnetz oder von Brenngas aus einem externen Gasnetz beheizt werden kann. In der Wasserstofferzeugungseinheit wird zweckmäßig dann das Wasserstoff-haltige Brenngas bzw. Wasserstoff hergestellt, wenn elektrischer Strom im Überschuss bzw. zu günstigen Tarifen zur Verfügung steht. Das im Gasspeichertank zwischengespeicherte Brenngas wird dann verfeuert, wenn von einer entsprechenden Temperatursteuerung ein Absinken der Temperatur in der Wärmespeichereinheit detektiert wird. Derartige Steuer- und Regeleinrichtungen zum Überwachen von Ist- bzw. Soll-Temperaturen in einem Wärmespeicher, die mit der Gasfeuerungsvorrichtung sowie der Gaszufuhr aus dem Gasspeichertank gekoppelt sind bzw. auf diese wirken, sind dem Fachmann auf dem Gebiet der Erfindung hinlänglich bekannt und werden deshalb an dieser Stelle auch nicht weiter im Detail ausgeführt.

Weiters kann im Rahmen der Erfindung ein Verfahren zum Speichern von Energie angegeben werden, welches die folgenden Schritte umfasst:
- autarkes Beheizen einer Wärmespeichereinheit mit zumindest einem Wärmespeicher, insbesondere einem Salzschmelzespeicher, wobei in einer Wasserstofferzeugungseinheit ein Brenngas enthaltend Wasserstoff hergestellt wird, welches Brenngas anschließend in einem Gasspeichertank zwischengelagert sowie bedarfsweise einer Gasfeuerungsvorrichtung zugeführt und dabei in thermische Energie umgewandelt wird, wobei die umgewandelte thermische Energie von einer Beheizungsvorrichtung der Wärmespeichereinheit zugeführt wird;
- Bereitstellen von thermischer Energie, vorzugsweise von erneuerbarer thermischer Energie, aus einer Energiebereitstellungseinheit, wobei die bereitgestellte thermische Energie in einen Dampfkreislauf eingespeist und in einer mit dem Dampfkreislauf gekoppelten Stromerzeugungseinheit in elektrischen Strom umgewandelt wird;
- Speichern von überschüssiger thermischer Energie aus der Energiebereitstellungseinheit in der Wärmespeichereinheit;
- bedarfsweises Einspeisen der in der Wärmespeichereinheit gespeicherten thermischen Energie in den Dampfkreislauf.

Die zuvor genannten Vorteile einer erfindungsgemäßen Energiespeicheranlage gelten sinngemäß gleichermaßen auch für das erfindungsgemäße Verfahren zum Speichern von Energie.

Bei einem weiter verbesserten erfindungsgemäßen Verfahren zum Speichern von Energie wird vorteilhaft der erzeugte elektrische Strom zumindest teilweise in ein externes Stromnetz eingespeist und/oder das erzeugte Brenngas zumindest teilweise in ein externes Gasnetz eingespeist. Somit kann beispielsweise je nach Anteil des erzeugten elektrischen Stroms in Bezug zur gespeicherten thermischen Energie das erfindungsgemäße Energiespeicherverfahren vorteilhaft auch als Verfahren zur Energieumwandlung bzw. als Stromerzeugungsverfahren dienen. Ebenso kann das erfindungsgemäße Energiespeicherverfahren ergänzend oder alternativ zur Stromerzeugung auch als Brenngaserzeugungsverfahren eingesetzt werden, wobei in diesem Fall das Hauptaugenmerk bei der Verfahrensführung auf einem möglichst hohen Anteil an erzeugtem Brenngas liegt.

Die bereits früher im Detail dargelegten Vorteile der entsprechenden autarken Beheizungsanlage bzw. der Energiespeicheranlage gelten ebenso für das erfindungsgemäße Verfahren zur autarken Beheizung einer Wärmespeichereinheit bzw. für das erfindungsgemäße Verfahren zum Speichern von Energie, welches die Vorteile der autarken Beheizungsanlage nutzt.

Somit gelingt es mit dem erfindungsgemäßen Verfahren zum Speichern von Energie, die aus dem Stand der Technik bekannten Nachteile der Erzeugung von elektrischem Strom aus regenerativen Energieformen zu überwinden. Mit dem erfindungsgemäßen Verfahren zum Speichern von Energie gelingt es, die unstetige Verfügbarkeit solcher regenerativer Energien, die wesentlich von den jeweiligen Wettereinflüssen abhängt und daher weder beeinflussbar noch vorhersagbar ist, auszugleichen, indem durch intelligente Systemintegration gespeicherte thermische Energie auch dann zur Verstromung zur Verfügung steht, wenn diese von einer regenerativen Energiebereitstellungseinheit wie beispielsweise einem Solarthermischen Kraftwerk nicht bereitgestellt werden kann. Aufgrund der witterungsunabhängigen, kontinuierlichen Möglichkeit zur Verstromung der verfügbaren bzw. gespeicherten thermischen Energie auch aus regenerativen Energieformen sowie aufgrund der autarken Beheizungsanlage, die ohne externe Strom- oder Gaszufuhr betrieben werden kann, gelingt es, ein besonders umweltfreundliches Energiespeicherungsverfahren bereitzustellen. Für jene Fälle, bei denen bereits die von der Energiebereitstellungseinheit bereitgestellte thermische Energie aus regenerativen, erneuerbaren Energiequellen wie beispielsweise aus der Sonnenenergie stammt, können mit dem erfindungsgemäßen Verfahren zum Speichern von Energie besonders vorteilhaft sowohl ein CO₂-neutraler Ökostrom, als auch ein CO₂-neutrales Brenngas erzeugt werden.

Weitere vorteilhafte Einzelheiten, Merkmale und Vorteile der Erfindung ergeben sich aus der nachfolgenden Erläuterung von in den Zeichnungen schematisch dargestellten Ausführungsbeispielen. In den Zeichnungen zeigen:
- - **Fig. 1**: in einem schematischen Verfahrensfließbild eine erfindungsgemäße Energiespeicheranlage, in die eine autarke Beheizungsanlage integriert ist;
- - **Fig. 2**: in einem schematischen Flussdiagramm die Energieströme der in Fig. 1 gezeigten Energiespeicheranlage.

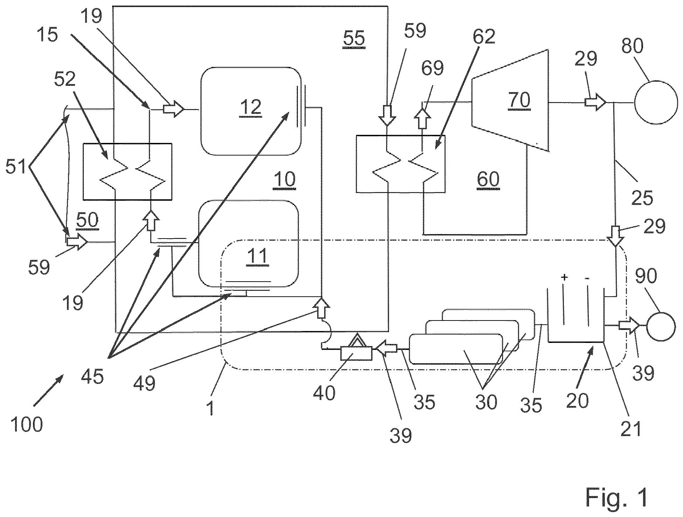

**Fig. 1** zeigt eine Beheizungsanlage 1 zur autarken Beheizung einer Wärmespeichereinheit 10. Die wesentlichen Bestandteile der Beheizungsanlage 1 sind in Fig. 1 mit einer strichpunktierten Konturlinie, die mit dem Bezugszeichen 1 versehen ist, gekennzeichnet und befinden sich im Wesentlichen innerhalb dieser Konturlinie. Die Wärmespeichereinheit 10 umfasst hier einen ersten Wärmespeicher 11 sowie einen zweiten Wärmespeicher 12. Beide Wärmespeicher 11 und 12 sind hier beispielsweise als Salzschmelzespeicher ausgeführt und mit einer Salzschmelze befüllt. Der erste Wärmespeicher 11 wird auf einem relativ niedrigeren Temperaturniveau betrieben und wird daher im Weiteren als beheizter kalter Salzschmelzespeicher 11 bezeichnet. Der zweite Wärmespeicher 12 wird hier auf einem in Bezug zum ersten Wärmetauscher 11 höheren Temperaturniveau betrieben und daher im Weiteren auch als beheizter heißer Salzschmelzespeicher 12 bezeichnet. Weiters sind mit dem Bezugszeichen 15 die Salzschmelze führenden Rohrleitungen bzw. peripheren Anlagenteile 15 bezeichnet, welche innerhalb der Wärmespeichereinheit 10 zum Befüllen, Entleeren sowie zum Befördern der Salzschmelze zwischen den beiden Wärmespeichern 11 und 12 sowie zu deren Einbindung in die Beheizungsanlage 1 erforderlich sind. Mit dem Pfeil 19 wird gespeicherte thermische Energie gekennzeichnet, welche in den Wärmespeichern 11 und 12 zwischengespeichert ist. Weiters umfasst die hier veranschaulichte Beheizungsanlage 1 eine Wasserstofferzeugungseinheit 20, welche als Elektrolyseur 21 ausgeführt ist und die mit einer Stromzuleitung 25 zur Zufuhr von elektrischem Strom 29 ausgestattet ist. Die Wasserstofferzeugungseinheit 20 ist mit einem nachgeschalteten Gasspeichertank 30, der hier beispielsweise als drei separate Gasspeichertanks 30 ausgeführt ist, mittels einer Gaszuleitung 35 zur Zufuhr von Brenngas 39 verbunden. In der Wasserstofferzeugungseinheit 20 wird im Elektrolyseur mittels elektrischem Strom 29 Wasser in Wasserstoff und Sauerstoff zerlegt. Das Wasserstoffhaltige Brenngas 39, welches in Fig. 1 durch einen Pfeil 39 bezeichnet ist, wird in den Gasspeichertanks 30 gespeichert und gelangt bei Bedarf weiter zu einer Gasfeuerungsvorrichtung 40, die mittels einer Beheizungsvorrichtung 45 mit der Wärmespeichereinheit 10 thermisch gekoppelt ist. In der Gasfeuerungsvorrichtung 40 wird das aus dem Gasspeichertank 30 zugeführte Brenngas verfeuert und in thermische Energie 49 umgewandelt, wobei die thermische Energie 49 von der Beheizungsvorrichtung 45 der Wärmespeichereinheit 10 zugeführt wird. Die Beheizungsvorrichtung 45 ist beispielsweise als Doppelmantelwärmetauscher außenseitig an den beiden Wärmespeichern 11 und 12 ausgeführt. Weitere Wärmetauscher der Beheizungsvorrichtung 45 sind beispielsweise als Doppelmantelwärmetauscher entlang der Salzschmelze führenden Rohrleitungen vorgesehen. Somit kann im Bedarfsfall zur Begleitheizung der Wärmespeichereinheit 1 zwischengespeichertes Brenngas 39 rasch den Gasspeichertanks 30 entnommen und verfeuert werden.

In Fig. 1 ist eine Energiespeicheranlage 100 gezeigt, die die zuvor beschriebene Beheizungsanlage 1 umfasst und darüber hinaus noch mit einer Energiebereitstellungseinheit 50 verbunden ist. Als Energiebereitstellungseinheit 50 dient hier beispielsweise ein Solarthermisches Kraftwerk, welches mit einem Solarthermischen Kreislauf 51 des Solarthermischen Kraftwerks mit der Energiespeicheranlage 100 verbunden ist. Zur thermischen Kopplung bzw. für die Zufuhr von thermischer Energie von der Energiebereitstellungseinheit 50 in einen Wärmekreislauf 55 der Energiespeicheranlage 100 dienen beispielsweise Wärmetauscher 52. Die von der Energiebereitstellungseinheit 50 zugeführte erneuerbare thermische Energie ist mit einem Pfeil 59 symbolisiert. Weiters ist der Wärmekreislauf 55 der Energiespeicheranlage 100 mit einem Dampfkreislauf 60 gekoppelt. Die thermische Koppelung erfolgt dabei ebenfalls mittels eines oder mehrerer Wärmetauscher 62. Im Dampfkreislauf 60 wird Dampf 69 erzeugt bzw. durch entsprechende Zufuhr von thermischer Energie 59 weiter erhitzt und in einer Stromerzeugungseinheit 70 mittels einer an sich bekannten Dampfturbine in elektrischen Strom 29 umgewandelt. Der hergestellte elektrische Strom 29 kann an externe Verbraucher 80 mittels Netzeinspeisung in das externe Stromnetz abgegeben werden. Ein Teil des erzeugten elektrischen Stroms 29 dient zum Betrieb der Elektrolyse 21 und damit zur Herstellung von Wasserstoffhaltigem Brenngas 39.

Überschüssiges Brenngas 39 kann entweder in entsprechenden Gasspeichertanks 30 zwischengelagert werden und zur bedarfsgerechten, autarken Beheizung der Wärmespeicher 11, 12 dienen. Ebenso kann das erzeugte Brenngas 39 auch an Verbraucher 90 mittels einer Brenngaseinspeisung in ein externes Gasnetz abgegeben werden. Gegebenenfalls ist dazu noch als Zwischenschritt eine Methanisierung erforderlich, um das elektrolytisch erzeugte Wasserstoffhaltige Brenngas in ein Methan-haltiges Brenngas zur Einspeisung in das externe Gasnetz umzuwandeln.

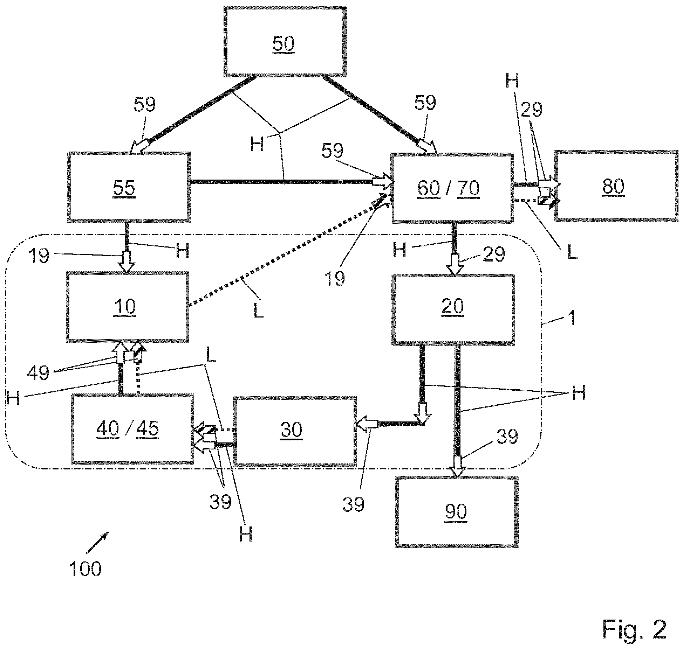

Fig. 2 veranschaulicht in einem schematischen Flussdiagramm die Energieströme der in Fig. 1 gezeigten Energiespeicheranlage 100. Die Bezugszeichen sind mit jenen zuvor genannten bzw. den in Fig. 1 gezeigten Bezugszeichen ident.

In Fig. 2 sind die wesentlichen Baueinheiten bzw. Verfahrenseinheiten der Energiespeicheranlage 100 mit Kästchen symbolisiert. Die Pfeile zwischen den Kästchen symbolisieren die Energieströme im Betrieb während des Beladens sowie Entladens der Energiespeicheranlage 100. Die fett durchgehend gezeichneten Energieströme, welche auch mit dem Bezugszeichen H gekennzeichnet sind, symbolisieren jene Energieströme, die fließen, wenn von der Energiebereitstellungseinheit 50 ein Überschuss an thermischer Energie 59 bereitgestellt wird. Dies ist im hier gezeigten Szenario mit einem Solarthermischen Kraftwerk als Energiebereitstellungseinheit 50 dann der Fall, wenn tagsüber die Sonne scheint bzw. eine sonnige Witterung herrscht.

Umgekehrt symbolisieren die strichliert gezeichneten Energieströme, welche auch mit dem Bezugszeichen L gekennzeichnet sind, jene Energieströme, die fließen, wenn von der Energiebereitstellungseinheit 50 kein oder nur ein geringer Zustrom an thermischer Energie 59 bereitgestellt wird. Dies ist im hier gezeigten Szenario mit einem Solarthermischen Kraftwerk als Energiebereitstellungseinheit 50 dann der Fall, wenn in der Nacht keine Solarthermische Energie erzeugt wird bzw. tagsüber bei bewölktem Wetter.

Die gezeigte Energiespeicheranlage 100 bietet den Vorteil, dass die zuvor beschriebene autarke Beheizungsanlage 1 zur Beheizung der Wärmespeichereinheit 10 vollständig in die Energiespeicheranlage 100 integriert ist. Eine Energiebereitstellungseinheit 50, beispielsweise ein Solarthermischer Kreislauf 51 eines Solarkraftwerks, dient dabei zur Bereitstellung von thermischer Energie 59, vorzugsweise von erneuerbarer thermischer Energie. Diese bereitgestellte thermische Energie 59 wird in einen Dampfkreislauf 60 eingespeist. Weiters umfasst die Energiespeicheranlage 100 eine Stromerzeugungseinheit 70 zur Bereitstellung von elektrischem Strom 29, wobei die Stromerzeugungseinheit 70 mit dem Dampfkreislauf 60 zur Umwandlung der bereitgestellten thermischen Energie in elektrischen Strom gekoppelt ist. Thermische Energie 59, die im Falle eines Solarkraftwerks zu Spitzenzeiten - also tagsüber bei sonnigem Wetter - üblicherweise im Überschuss zur Verfügung steht, kann zumindest teilweise verstromt werden. Ein Überschuss an thermischer Energie 19 wird der Wärmespeichereinheit 10 zur Verfügung gestellt bzw. in dieser zwischengespeichert. Zumindest ein Teil des erzeugten elektrischen Stroms 29 - der im Falle der Koppelung mit einem Solarkraftwerk sogenannter "grüner Strom" bzw. "Ökostrom" ist - kann der Wasserstofferzeugungseinheit 20 zugeführt werden, um Brenngas 39 zu produzieren und um dieses im Gasspeichertank 30 einzulagern.

Da die Wärmespeichereinheit 10 mit dem Dampfkreislauf 60 zur Einspeisung von gespeicherter thermischer Energie 19 thermisch gekoppelt ist, kann somit die Verstromung 70 von thermischer Energie in der Energiespeicheranlage vorteilhaft auch dann gewährleistet werden, wenn keine Zufuhr von Solarthermischer Energie durch das Solarkraftwerk erfolgt, wie dies beispielsweise bei bedecktem Himmel bzw. während der Nachtstunden der Fall ist. In dieser Zeit, in der keine oder zu wenig thermische Energie von der Energiebereitstellungseinheit 50 zur Verfügung gestellt wird, wird die in der Wärmespeichereinheit 10 zwischengespeicherte thermische Energie 19 in den Dampfkreislauf 60 eingespeist, wie dies in Fig. 2 durch den strichlierten Pfeil L zwischen der Wärmespeichereinheit 10 und dem Dampfkreislauf 60 gekennzeichnet ist. Dadurch ist vorteilhaft eine kontinuierliche Stromerzeugung 70 möglich. Da zumindest ein Teil des kontinuierlich erzeugten elektrischen Stroms 29 der Elektrolyse 20 zugeführt wird, ist somit auch ein kontinuierlicher Betrieb der Beheizungsanlage 1 gewährleistet. Überschüsse an erzeugtem elektrischem Strom 29 bzw. an hergestelltem Brenngas 39 können beispielsweise in externe Stromnetze 80 bzw. Gasnetze 90 eingespeist werden. Aufgrund der flexiblen Steuerungsmöglichkeiten im Betrieb der erfindungsgemäßen Energiespeicheranlage kann die Einspeisung der erzeugten Überschüsse von produziertem Strom bzw. von Brenngas in die jeweiligen externen Netze zu jenen Zeitabschnitten bzw. Tageszeiten erfolgen, in denen höhere Energiepreise für Strom bzw. Brenngas erzielt werden können, was ein weiterer wirtschaftlicher Vorteil der bereitgestellten Energiespeicheranlage ist.

Zur Regelung bzw. Steuerung der gezeigten Energiespeicheranlage 100: Wenn in Fig. 2 beide Pfeile H, L parallel nebeneinander eingezeichnet sind, wie dies beispielsweise zwischen dem Gasspeichertank 30 und der Gasfeuerungsvorrichtung 40 sowie der Wärmespeichereinheit 10 der Fall ist, so bedeutet dies, dass die Beheizungsanlage 1 immer aktiv ist und daher autark und unabhängig von Angebot an gerade verfügbarer thermischer Energie der Energiebereitstellungseinheit 50 ist. Im Fall eines Concentrated Solar Power (CSP)-Kraftwerks bedeutet dies also, dass die Begleitheizung der Wärmespeichereinheit 10 unabhängig davon betrieben werden kann, ob gerade die Sonne scheint.

Wesentlich ist in Fig. 2 der mit einem Pfeil 19 gekennzeichnete, strichliert gezeichnete Energiestrom L zwischen der Wärmespeichereinheit 10 und dem Dampfkreislauf 60: Wenn beispielsweise in der Nacht zu wenig thermische Energie 59 in Form des Energiestroms H zur Verfügung steht, um die Stromerzeugungseinheit 70 zu betreiben und Strom 29 herzustellen, so wird die gespeicherte thermische Energie 19 aus der Wärmespeichereinheit 10 in den Dampfkreislauf 60 eingespeist. Somit ist vorteilhaft eine stetige Stromeinspeisung 29 in ein externes Stromnetz 80 möglich - unabhängig vom jeweiligen Grad an verfügbarer Energie 59 aus der Energiebereitstellungseinheit 50.

### LISTE DER BEZUGSZEICHEN

- 1: Beheizungsanlage
- 10: Wärmespeichereinheit
- 11: erster Wärmespeicher, beheizter kalter Salzschmelzespeicher
- 12: zweiter Wärmespeicher, beheizter heißer Salzschmelzespeicher
- 15: Schmelzeführende Rohrleitungen bzw. periphere Anlagenteile
- 19: Gespeicherte thermische Energie (Pfeil)
- 20: Wasserstofferzeugungseinheit
- 21: Elektrolyseur
- 25: Stromzuleitung
- 29: elektrischer Strom (Pfeil)
- 30: Gasspeichertank
- 35: Gaszuleitung für Brenngas
- 39: Brenngas (Pfeil)
- 40: Gasfeuerungsvorrichtung
- 45: Beheizungsvorrichtung
- 49: verfeuerte thermische Energie (Pfeil)
- 50: Energiebereitstellungseinheit
- 51: Solarthermischer Kreislauf (eines Solarthermischen Kraftwerks)
- 52: Wärmetauscher
- 55: Wärmekreislauf
- 59: (erneuerbare) thermische Energie (Pfeil)
- 60: Dampfkreislauf
- 62: Wärmetauscher
- 69: Dampf (Pfeil)
- 70: Stromerzeugungseinheit
- 80: Verbraucher, Netzeinspeisung in das externe Stromnetz
- 90: Verbraucher, Brenngaseinspeisung in das externe Gasnetz
- 100: Energiespeicheranlage
- H: viel thermische Energie bereitgestellt bzw. vorhanden (durchgehender Pfeil)
- L: wenig thermische Energie bereitgestellt bzw. vorhanden (strichlierter Pfeil)

## Patentansprüche

1. Anlage (1) zur autarken Beheizung einer Wärmespeichereinheit (10) mit zumindest einem Wärmespeicher (11,12), insbesondere einem Salzschmelzespeicher (11,12), **dadurch gekennzeichnet, dass** die Anlage (1) eine Wasserstofferzeugungseinheit (20), einen Gasspeichertank (30) und eine Gasfeuerungsvorrichtung (40), die mit einer Gaszuleitung (35) miteinander verbunden sind, sowie weiterhin eine Stromzuleitung (25), die zur Bereitstellung von elektrischem Strom (29) mit der Wasserstofferzeugungseinheit (20) verbunden ist, umfasst, wobei die Gasfeuerungsvorrichtung (40) mit der Wärmespeichereinheit (10) mittels einer Beheizungsvorrichtung (45) thermisch gekoppelt ist, sowie in dem Gasspeichertank (30) ein in der Wasserstofferzeugungseinheit (20) hergestelltes Brenngas (39) enthaltend Wasserstoff zwischengelagert ist, wobei die Gasfeuerungsvorrichtung (40) derart ausgestaltet ist, das aus dem Gasspeichertank (30) zugeführte Brenngas (39) zu verfeuern und dabei in thermische Energie (49) umzuwandeln, wobei die umgewandelte thermische Energie (49) von der Beheizungsvorrichtung (45) der Wärmespeichereinheit (10) zugeführt ist.

2. Beheizungsanlage (1) nach Anspruch 1, **dadurch gekennzeichnet, dass** die Wasserstofferzeugungseinheit (20) zumindest einen Elektrolyseur (21) umfasst, wobei das hergestellte Brenngas zumindest 95 Vol.-% Wasserstoff, vorzugsweise von 97 Vol.-% bis 99,999 Vol.-% Wasserstoff, enthält.

3. Beheizungsanlage (1) nach Anspruch 1 oder 2, **dadurch gekennzeichnet, dass** die Wasserstofferzeugungseinheit (20) mit einer Methanisierungseinheit zur Herstellung von Methan-haltigem Brenngas gekoppelt ist.

4. Beheizungsanlage (1) nach einem der Ansprüche 1 bis 3, **dadurch gekennzeichnet, dass** die Wärmespeichereinheit (10) zumindest zwei auf unterschiedlichen Temperaturniveaus betriebene Wärmespeicher (11,12) sowie damit verbundene Rohrleitungen und/oder periphere Anlagenteile (15) umfasst.

5. Beheizungsanlage (1) nach einem der Ansprüche 1 bis 4, **dadurch gekennzeichnet, dass** der zumindest eine Wärmespeicher (11,12) ausgewählt ist aus einer Gruppe umfassend: sensibler Wärmespeicher, Latentwärmespeicher und/oder Salzschmelzespeicher.

6. Beheizungsanlage (1) nach einem der Ansprüche 1 bis 5, **dadurch gekennzeichnet, dass** in dem Gasspeichertank (30) Brenngas (39) in einem Druckbereich von 1 bar bis 900 bar zwischengelagert ist.

7. Beheizungsanlage (1) nach einem der Ansprüche 1 bis 6, **dadurch gekennzeichnet, dass** die Abgastemperatur des in der Gasfeuerungsvorrichtung (40) verfeuerten Brenngases (39) um mindestens 10 K über der Temperatur des zumindest einen Wärmespeichers (11,12) der Wärmespeichereinheit (10), vorzugsweise bei mehreren Wärmespeichern um mindestens 10 K über der Temperatur des kältesten zu beheizenden Wärmespeichers (12), liegt.

8. Anlage (100) zum Speichern von Energie, umfassend eine Beheizungsanlage (1) nach einem der Ansprüche 1 bis 7, **dadurch gekennzeichnet, dass** die Anlage (100) weiterhin eine Energiebereitstellungseinheit (50) zur Bereitstellung von thermischer Energie (59), einen Dampfkreislauf (60) zur Einspeisung der bereitgestellten thermischen Energie (59), sowie eine Stromerzeugungseinheit (70) zur Bereitstellung von elektrischem Strom (29), umfasst, wobei die Stromerzeugungseinheit (70) mit dem Dampfkreislauf (60) zur Umwandlung der bereitgestellten thermischen Energie (59) in elektrischen Strom (29) gekoppelt ist, sowie die Wärmespeichereinheit (10) mit dem Dampfkreislauf (60) zur Einspeisung von gespeicherter thermischer Energie (19) gekoppelt ist.

9. Energiespeicheranlage (100) nach Anspruch 8, **dadurch gekennzeichnet, dass** die Wärmespeichereinheit (10) mit der Energiebereitstellungseinheit (50) zum Speichern von überschüssiger thermischer Energie (59) gekoppelt ist.

10. Energiespeicheranlage (100) nach Anspruch 8 oder 9, **dadurch gekennzeichnet, dass** die Energiebereitstellungseinheit (50) thermische Energie (59) bereitstellt und ausgewählt ist aus einer Gruppe umfassend: Solarthermisches Kraftwerk (51), Biomasse-Heizkraftwerk, Dampfkraftwerk, Nahwärmeheizkraftwerk, Fernwärmeheizkraftwerk, Power-to-heat-Anlage, Kraft-Wärme-Kopplung (KWK)-Anlage.

11. Energiespeicheranlage (100) nach einem der Ansprüche 8 bis 10, weiterhin umfassend eine Netzeinspeisung für erzeugten elektrischen Strom (29) in ein externes Stromnetz (80) und/oder eine Gaseinspeisung für erzeugtes Brenngas (39) in ein externes Gasnetz (90).

12. Verfahren zur autarken Beheizung einer Wärmespeichereinheit (10) mit zumindest einem Wärmespeicher (11,12), insbesondere einem Salzschmelzespeicher (11,12), **dadurch gekennzeichnet, dass** in einer Wasserstofferzeugungseinheit (20) ein Brenngas (39) enthaltend Wasserstoff hergestellt wird, welches Brenngas (39) anschließend in einem Gasspeichertank (30) zwischengelagert sowie bedarfsweise einer Gasfeuerungsvorrichtung (40) zugeführt und dabei in thermische Energie (49) umgewandelt wird, wobei die Gasfeuerungsvorrichtung (40) mit der Wärmespeichereinheit (10) mit einer Beheizungsvorrichtung (45) thermisch gekoppelt ist und die umgewandelte thermische Energie (49) von der Beheizungsvorrichtung (45) der Wärmespeichereinheit (10) zugeführt wird.

13. Verfahren zum Speichern von Energie, **gekennzeichnet durch** die folgenden Schritte:
- autarkes Beheizen einer Wärmespeichereinheit (10) mit zumindest einem Wärmespeicher (11,12), insbesondere einem Salzschmelzespeicher (11,12), wobei in einer Wasserstofferzeugungseinheit (20) ein Brenngas (39) enthaltend Wasserstoff hergestellt wird, welches Brenngas (39) anschließend in einem Gasspeichertank (30) zwischengelagert sowie bedarfsweise einer Gasfeuerungsvorrichtung (40) zugeführt und dabei in thermische Energie (49) umgewandelt wird, wobei die umgewandelte thermische Energie (49) von einer Beheizungsvorrichtung (45) der Wärmespeichereinheit (10) zugeführt wird;
- Bereitstellen von thermischer Energie (59), vorzugsweise von erneuerbarer thermischer Energie (59), aus einer Energiebereitstellungseinheit (50), wobei die bereitgestellte thermische Energie (59) in einen Dampfkreislauf (60) eingespeist und in einer mit dem Dampfkreislauf (60) gekoppelten Stromerzeugungseinheit (70) in elektrischen Strom (29) umgewandelt wird;
- Speichern von überschüssiger thermischer Energie (59) aus der Energiebereitstellungseinheit (50) in der Wärmespeichereinheit (10);
- bedarfsweises Einspeisen der in der Wärmespeichereinheit (10) gespeicherten thermischen Energie (19) in den Dampfkreislauf (60).

14. Verfahren zum Speichern von Energie nach Anspruch 14, **dadurch gekennzeichnet, dass** der erzeugte elektrische Strom (29) zumindest teilweise in ein externes Stromnetz (80) eingespeist wird und/oder das erzeugte Brenngas (39) zumindest teilweise in ein externes Gasnetz (90) eingespeist wird.
